# EUROPEAN PATENT APPLICATION

(11) **EP 1 667 257 A1**
(43) Date of publication of application: **07.06.2006**
(21) Application number: 05719210.6
(22) Date of filing: 17.02.2005
(51) Int. Cl.: H01M 4/06, H01M 4/52, H01M 4/62, H01M 6/06

(54) **ALKALINE BATTERY**

(30) Priority: 24.03.2004 JP 2004087433
(71) Applicant: MATSUSHITA ELECTRIC INDUSTRIAL CO., LTD., Kadoma-shi, Osaka 571-8501 (JP)
(72) Inventor: KATO, Fumio, Osaka 571-0046 (JP); SAWADA, Katsuya, Osaka 573-0027 (JP); OKADA, Tadaya, Osaka 572-0024 (JP); MUKAI, Yasuo, Moriguchi-shi, Osaka 570-0004 (JP); NOYA, Shigeto, Osaka 572-0048 (JP)
(74) Representative: Bradley, Josephine Mary
(86) International application number: PCT/JP2005/002408
(87) International publication number: WO 2005/091399

(57) **Abstract**

An alkaline battery including a positive electrode, a negative electrode and an alkaline electrolyte, the positive electrode including a positive electrode material mixture containing a nickel oxyhydroxide, electrolytic manganese dioxide and a graphite conductive material, wherein the nickel oxyhydroxide includes a crystal having manganese dissolved therein and having a β type structure, and the amount of the manganese contained in the nickel oxyhydroxide is 0.5 to 10 mol% relative to the total amount of nickel and the manganese in the nickel oxyhydroxide.

## Description

### Technical Field

The present invention relates to an alkaline primary battery. Particularly, the invention relates to a so-called nickel-manganese battery comprising a positive electrode material mixture containing manganese dioxide and nickel oxyhydroxide as active materials, and adopting an inside-out structure.

### Background Art

Alkaline batteries usually have an inside-out structure. The inside-out structure comprises: a positive electrode case serving also as a positive electrode terminal; cylindrical positive electrode material mixture pellets comprising manganese dioxide which are attached to the inside of the positive electrode case; and a gel zinc negative electrode disposed in the hollow of the positive electrode material mixture pellets with a separator interposed therebetween. The positive electrode material mixture of alkaline batteries usually comprises electrolytic manganese dioxide and a graphite conductive material.

With the widespread of digital equipment in recent years, the load power of the equipment that use alkaline batteries is gradually increasing. Accordingly, demand is increasing for batteries that excel in high loaded discharge performance. In order to cope with this demand, it is proposed to improve high loaded discharge performance of alkaline batteries by mixing a nickel oxyhydroxide with a positive electrode material mixture (see Japanese Laid-Open Patent Publication No. Sho 57-72266). In recent years, alkaline batteries like this have been commercialized and spread widely.

The nickel oxyhydroxide used for alkaline batteries is usually prepared by oxidizing spherical or oval shaped nickel hydroxide used for alkaline storage batteries (secondary batteries) with an oxidizing agent such as an aqueous solution of sodium hypochlorite (see Japanese Examined Patent Publication No. Hei 04-80513). In order to fill the nickel oxyhydroxide into a battery at a high density, nickel hydroxide having a high bulk density (tap density) and comprising a crystal having a β type structure is usually used as a raw material. By treating the raw material with an oxidizing agent, nickel oxyhydroxide comprising a crystal having a β type structure is obtained.

For the purpose of enhancing the capacity or utilization of the positive electrode, nickel hydroxide for alkaline storage batteries containing cobalt, zinc and the like is often used (see Japanese Examined Patent Publication No. Hei 07-77129). Cobalt, zinc and the like are incorporated in the crystals of the nickel hydroxide, whereby a solid solution nickel hydroxide is formed.

Even in recent years, various proposals have been made. For example, Japanese Laid-Open Patent Publication No. 2002-8650 proposes to use substantially-spherical nickel oxyhydroxide in an alkaline battery. Japanese Laid-Open Patent Publication No. 2002-203546 proposes to use a solid solution nickel oxyhydroxide containing zinc or cobalt. Japanese Laid-Open Patent Publication No. 2003-31213 proposes to control the BET specific surface area of nickel oxyhydroxide. Japanese Laid-Open Patent Publication No. 2003-123745 proposes to control the amount of an impurity contained in nickel oxyhydroxide such as sulfate ions. Japanese Laid-Open Patent Publication No. 2003-123747 proposes to control the average particle size of nickel oxyhydroxide or electrolytic manganese dioxide. It can be said that all of the proposals mentioned above were made based on the same conception, that is, just to apply well-known techniques of the positive electrode for alkaline storage batteries (or secondary batteries) to primary batteries.

### Disclosure of the Invention

When a nickel oxyhydroxide is added to a basic composition of electrolytic manganese dioxide and a graphite conductive material, the discharge voltage of the obtained battery having zinc in the negative electrode often exhibits two plateau regions. A first plateau occurs around a battery voltage of about 1.6 V. A second plateau occurs around a battery voltage of about 1.25 V. The discharge capacity in the first plateau region is mainly attributed to a discharge reaction in which nickel having a valence of about 3.0 contained in the nickel oxyhydroxide is reduced to a lower oxidation state.

In general, it can be stated that the greater the discharge capacity in the first plateau, the more advantageous it is to achieve a higher capacity battery. However, if the discharge is performed until the nickel oxyhydroxide is completely reduced close to the bivalent state in the first plateau region, the electronic conductivity of the nickel oxyhydroxide sharply drops, which reduces the electronic conductivity of the whole positive electrode active material mixture. As a result, the capacity of the electrolytic manganese dioxide that contributes to a discharge reaction in the second plateau region cannot be utilized sufficiently.

Taking this into consideration, it can be surmised the nickel oxyhydroxide should not be discharged completely in the first plateau region. Preferably, the nickel oxyhydroxide has an appropriate amount of residual capacity in the second plateau region. Presumably, this allows the positive electrode material mixture to maintain relatively high electronic conductivity even when the electrolytic manganese dioxide is discharged.

Meanwhile, from the standpoint of the productivity and cost of the raw material, a nickel oxyhydroxide for alkaline storage batteries is applied as it is to alkaline primary batteries in most cases. Because the material development based on a specific discharge mechanism as described above has not been done yet, the capacities of the electrolytic manganese dioxide and the nickel oxyhydroxide which are contained in the batteries are not always sufficiently utilized.

### Means for Solving the Problems

An object of the present invention is to sufficiently use the capacities of electrolytic manganese dioxide and a nickel oxyhydroxide which are contained in an alkaline battery while maintaining the electronic conductivity of a positive electrode material mixture even during the discharge of the electrolytic manganese dioxide in the second plateau region.

Another object of the present invention is to provide an effective means to further improve the high loaded discharge performance and the utilization of electrolytic manganese dioxide.

Specifically, the present invention relates to an alkaline battery comprising a positive electrode, a negative electrode and an alkaline electrolyte, the positive electrode comprising a positive electrode material mixture containing a nickel oxyhydroxide, electrolytic manganese dioxide and a graphite conductive material, wherein the nickel oxyhydroxide comprises a crystal having a β type structure, the crystal having manganese dissolved therein, and the amount of the manganese contained in the nickel oxyhydroxide is 0.5 to 10 mol% relative to the total amount of the nickel and manganese contained in the nickel oxyhydroxide.

Another object of the present invention is to provide an effective means to increase the capacity of the battery to a higher level and improve the utilization of the electrolytic manganese dioxide by controlling the discharge capacity of the nickel oxyhydroxide obtained in the second plateau region to an appropriate level.

In order to achieve the above objectives, the present invention provides another alkaline battery comprising a positive electrode, a negative electrode and an alkaline electrolyte, the positive electrode comprising a positive electrode material mixture comprising a nickel oxyhydroxide, electrolytic manganese dioxide and a graphite conductive material. The nickel oxyhydroxide has the following properties. Specifically, in the present invention, when a molded article comprising a mixture of the nickel oxyhydroxide and the graphite conductive material is immersed in an aqueous solution containing 40 wt% KOH, and a constant current per gram of the nickel oxyhydroxide of 5 mA is then applied to the molded article, the potential of the molded article exhibits a first plateau region ranging from +500 to +100 mV relative to an Hg/HgO electrode and a second plateau region ranging from +100 to -400 mV relative to the Hg/HgO electrode. The discharge capacity in the first plateau region per gram of the nickel oxyhydroxide is 220 to 250 mAh. The discharge capacity in the second plateau region per gram of the nickel oxyhydroxide is 10 to 25 mAh.

### Effects of the Invention

According to the present invention, because the nickel oxyhydroxide is not completely discharged at the first plateau region and it has an appropriate level of residual capacity in the second region, the electronic conductivity of the positive electrode material mixture is maintained at a high level even during the discharge of the electrolytic manganese dioxide in the second plateau region. Accordingly, it is possible to sufficiently use the capacities of the electrolytic manganese dioxide and the nickel oxyhydroxide which are contained in the battery.

The present invention not only allows the capacities of the electrolytic manganese dioxide and the nickel oxyhydroxide to be sufficiently used, but also greatly increases the high loaded discharge performance.

According to the present invention, it is possible to ensure sufficient discharge capacity in the first plateau region and, at the same time, to ensure an improved current collection from the electrolytic manganese dioxide.

### Brief Description of Drawings

FIG. 1 is a front view, partially in cross section, of a nickel-manganese battery according to an example of the present invention.
FIG. 2 is a graph showing the discharge curves of nickel-manganese batteries A1 to C1 according to Example 1.
FIG. 3 is a graph showing the potential curves of the positive electrodes of model cells A2 to C2 according to Example 1.

### Best Mode for Carrying Out the Invention

An alkaline battery of the present invention comprises a positive electrode, a negative electrode and an alkaline electrolyte. The positive electrode comprises a positive electrode material mixture comprising nickel oxyhydroxide, electrolytic manganese dioxide and a graphite conductive material.

When electrolytic manganese dioxide and nickel oxyhydroxide are compared, electrolytic manganese dioxide is superior in terms of capacity per unit gram (mAh/g), ease of filling into a case and material cost. In terms of discharge voltage and high loaded discharge performance, however, nickel oxyhydroxide is superior.

Accordingly, considering the balance of battery properties and cost, the positive electrode material mixture preferably contains nickel oxyhydroxide and electrolytic manganese dioxide in amounts of 10 to 80 wt% and 20 to 90 wt%, respectively, relative to the total amount of the nickel oxyhydroxide and the electrolytic manganese dioxide. In order to obtain a battery particularly excellent in the balance of the properties, the amounts of the nickel oxyhydroxide and the electrolytic manganese dioxide are preferably 30 to 60 wt% and 40 to 70 wt%, respectively.

An active material in the positive electrode material mixture preferably has a higher volume energy density. In order to ensure sufficient high loaded discharge performance, it is necessary to add a conductive material comprising graphite to the positive electrode active material. A preferred amount of the graphite conductive material is 3 to 10 wt%, more preferably 5 to 8 wt%, relative to the total amount of the nickel oxyhydroxide, the electrolytic manganese dioxide and the graphite conductive material contained in the positive electrode material mixture. When the amount of the graphite conductive material is less than 3 wt%, the electronic conductivity of the whole positive electrode material mixture might be insufficient regardless of the residual capacity of the nickel oxyhydroxide. Conversely, when the amount exceeds 10 wt%, the rate of the active material relative to the positive electrode material mixture will be too small, which might make the volume energy density of the active material insufficient.

When a molded article comprising a mixture of the nickel oxyhydroxide and the graphite conductive material is immersed in an aqueous solution containing 40 wt% KOH, and a constant current per gram of the nickel oxyhydroxide of 5 mA is then applied to the molded article, the potential of the molded article exhibits a first plateau region (i.e. high potential region) and a second plateau region (i.e. low potential region).

The potential of the molded article can be classified into two regions: a first plateau region in a range of +500 to +100 mV relative to an Hg/HgO electrode and a second plateau region in a range of +100 to -400 mV relative to the Hg/HgO electrode.

The discharge capacity per gram of the nickel oxyhydroxide in the first plateau region is preferably controlled to 220 to 250 mAh/g. Likewise, the discharge capacity per gram of the nickel oxyhydroxide in the second plateau region is preferably controlled to 10 to 25 mAh/g.

The discharge capacity in the first plateau region is mainly attributed to a discharge reaction in which nickel having a valence of about 3.0 contained in the nickel oxyhydroxide is reduced to a lower oxidation state so as to make the nickel oxyhydroxide low in electronic conductivity. Assuming that all the nickel in the nickel oxyhydroxide is reduced from a valence of about 3.0 to 2.1, the upper limit of the discharge capacity per gram of the nickel oxyhydroxide obtained in the first plateau region is about 260 mAh/g.

If the nickel oxyhydroxide has good electronic conductivity and good proton diffusibility, the discharge capacity per gram of the nickel oxyhydroxide obtained in the first plateau region might exceed 250 mAh. In this case, the nickel oxyhydroxide is discharged completely in the first plateau region, and rarely has the capacity in the second plateau region. For this reason, in the second plateau region where the discharge reaction of electrolytic manganese dioxide takes place, the electronic conductivity of the positive electrode material mixture will be significantly reduced, enough capacity cannot be obtained.

Conversely, when the average valence of nickel in the nickel oxyhydroxide is low or when the amount of Mn incorporated in the nickel oxyhydroxide therein is excessively large, the discharge capacity per gram of the nickel oxyhydroxide obtained in the first plateau region might be less than 220 mAh. In this case, the discharge capacity of the nickel oxyhydroxide will be insufficient, and therefore a high capacity battery cannot be obtained.

When a nickel oxide of high oxidation state is locally formed in the nickel oxyhydroxide, it is presumed that the nickel oxide of high oxidation state contributes to the discharge reaction in the second plateau region.

The nickel oxyhydroxide containing a certain amount of the nickel oxide of high oxidation state as described above prevents the decrease of the electronic conductivity even in the second plateau region. Accordingly, the decrease of the electronic conductivity of the positive electrode material mixture in the second plateau region is prevented. As a result, the current collectability from the electrolytic manganese dioxide is enhanced, offering an alkaline battery having a higher capacity.

When the discharge capacity per gram of the nickel oxyhydroxide obtained in the second plateau region exceeds 25 mAh, however, the discharge capacity in the first plateau region will be reduced to less than 220 mAh/g. When the discharge capacity per gram of the nickel oxyhydroxide obtained in the second plateau region is less than 10 mAh, on the other hand, because the amount of the nickel oxide that contributes to the discharge reaction in the second plateau region will be small, the effect of enhancing the current collectability from the electrolytic manganese oxide will be small.

The nickel oxyhydroxide having the preferable electrical characteristics as described above can be relatively easily prepared by incorporating a small amount of manganese into a nickel oxyhydroxide. The incorporation of manganese in a nickel oxyhydroxide also greatly enhances the high loaded discharge performance of the battery obtained. Particularly, a nickel oxyhydroxide comprising a crystal having a β type structure has the preferable electrical characteristics as described above, and at the same time, it is excellent in terms of small volume change during discharge.

Even when a metal other than manganese is incorporated in nickel oxyhydroxide, it is possible to form nickel oxide of high oxidation state that contributes to the discharge reaction in the second plateau region. Examples of the metal, other than manganese, include zinc, cobalt, aluminum and chromium. Yet, the effect of enhancing the high loaded discharge performance of the battery is especially remarkable when manganese is incorporated in nickel oxyhydroxide.

In a preferred embodiment of the present invention, the nickel oxyhydroxide comprises a crystal having manganese dissolved therein and having a β type structure. In a particle of such nickel oxyhydroxide, nickel oxide of high oxidation state that contributes to the discharge reaction in the second plateau region of low potential is locally formed. In other words, a part of the nickel oxyhydroxide comprising a crystal having manganese dissolved therein and having a β type structure contributes to the discharge reaction in the second plateau region of low potential. Accordingly, even during the discharge of the electrolytic manganese dioxide in the second plateau region, the electronic conductivity of the positive electrode material mixture is maintained at a high level, and therefore the capacity of the electrolytic manganese dioxide can be sufficiently used. Moreover, the incorporation of manganese in the nickel oxyhydroxide also greatly enhances the high loaded discharge performance of the battery obtained.

The nickel oxyhydroxide comprising a crystal having manganese dissolved therein and having a β type structure is prepared by, for example, oxidizing nickel hydroxide incorporating manganese therein with an oxidizing agent. The nickel hydroxide preferably comprises crystals having a β type structure.

In another preferred embodiment of the present invention, the nickel oxyhydroxide comprises a crystal having a metal other than manganese dissolved therein. Even in a particle of such nickel oxyhydroxide, nickel oxide of high oxidation state that contributes to the discharge reaction in the second plateau region of low potential is locally formed. The nickel oxyhydroxide having a metal element other than manganese dissolved therein also preferably comprises crystals having a β type structure.

The nickel oxyhydroxide having a metal element other than manganese dissolved therein is prepared by, for example, oxidizing nickel hydroxide incorporating a metal other than manganese therein with an oxidizing agent. In this case also, it is preferred to use nickel hydroxide comprising a crystal having a β type structure as a raw material.

Preferred examples of the particle shape of the nickel hydroxide include, but not limited to, spherical shape and oval shape. The tap density of the nickel hydroxide is preferably 2.0 to 2.3 g/cm³.

The nickel hydroxide preferably has a BET specific surface area of 5 to 20 m²/g.

The concentration of sulfate ion contained in the nickel hydroxide is preferably 0.2 to 0.5 wt%.

The volume based average particle size (D₅₀) of the nickel hydroxide is preferably 10 to 20 µm.

The nickel hydroxide is prepared, for example, in a reaction vessel equipped with stirring blades. To the reaction vessel is added, for example, pure water as the reaction phase where the nickel hydroxide grows. Preferably, a small amount of reducing agent is added to the reaction phase. More preferably, bubbling with nitrogen gas is performed.

Preferred starting materials for the nickel hydroxide include manganese sulfate, or any sulfate of a metal other than manganese, and nickel sulfate. It is to be understood that nickel nitrate or the like can be used instead of nickel sulfate and that manganese nitrate or the like can be used instead of manganese sulfate. Also, instead of a sulfate of a metal other than manganese, any nitrate or the like of a metal other than manganese can be used.

The preparation procedure of the nickel oxyhydroxide comprising a crystal having manganese dissolved therein and having a β type structure will be described below. It should be noted that the method described below can be applied to the preparation of the nickel oxyhydroxide comprising a crystal having a metal element other than manganese dissolved therein by replacing an aqueous solution of manganese sulfate (II) with an aqueous solution of other metal salt.

The preparation procedure of the nickel hydroxide includes a step of feeding, for example, an aqueous solution of nickel sulfate (II), an aqueous solution of manganese sulfate (II), an aqueous solution of sodium hydroxide and aqueous ammonia into a reaction vessel, followed by stirring while maintaining the pH of the reaction phase at a certain level. This step allows the nuclei of the nickel hydroxide to be precipitated in the reaction phase and then to grow. Subsequently, the resulting particles are heated in another aqueous solution of sodium hydroxide to remove sulfate ion, which are then washed with water, followed by drying to give nickel hydroxide.

The preparation procedure of the nickel oxyhydroxide includes a step of introducing, for example, the nickel hydroxide into an aqueous solution of sodium hydroxide serving as the reaction phase, to which a sufficient amount of an oxidizing agent is added, followed by stirring. In this step, the nickel hydroxide is oxidized to give nickel oxyhydroxide.

The oxidizing agent for converting the nickel hydroxide into the nickel oxyhydroxide may be an aqueous solution of sodium hypochlorite, an aqueous solution of potassium peroxydisulfate or a hydrogen peroxide solution.

The particle shape of the nickel oxyhydroxide varies depending on the nickel hydroxide. Preferably, the particles of the nickel oxyhydroxide are spherical or oval shaped. The tap density of the nickel oxyhydroxide is preferably 2.1 to 2.4 g/cm³ .

The BET specific surface area of the nickel oxyhydroxide is preferably 10 to 20 m²/g.

The concentration of the sulfate ion contained in the nickel oxyhydroxide is preferably 0.1 to 0.3 wt%.

The volume based average particle size (D₅₀) of the nickel oxyhydroxide is preferably 10 to 20 µm.

The amount of the manganese contained in the nickel oxyhydroxide is preferably 0.5 to 10 mol%, more preferably 2 to 7 mol%, relative to the total amount of the nickel and manganese contained in the nickel oxyhydroxide. When the manganese amount is less than 0.5 mol%, the discharge capacity in the second plateau region will be too small. Conversely, when the manganese amount exceeds 10 mol%, the discharge capacity in the second plateau region will be too large, making the discharge capacity in the first plateau region insufficient.

In the case of using a metal other than manganese (hereinafter referred to as "metal M"), the amount of the metal M contained in the nickel oxyhydroxide is preferably 0.5 to 10 molt, more preferably 2 to 5 molt, relative to the total amount of the nickel and the metal M contained in the nickel oxyhydroxide. When the amount of the metal M is less than 0.5 mol%, the discharge capacity in the second plateau region will be too small. Conversely, when the amount of the metal M exceeds 10 mol%, the discharge capacity in the second plateau region will be too large, making the discharge capacity in the first plateau region insufficient.

Preferably, the positive electrode material mixture contains at least one rare earth metal oxide selected from the group consisting of Y₂O₃, Er₂O₃, Tm₂O₃, Yb₂O₃ and Lu₂O₃. These rare earth metal oxides dissolve in a very small amount in an alkaline electrolyte to form a hydroxide and then deposit. As a result, a coating film comprising a rare earth metal element is formed on the surface of the particles of the nickel oxyhydroxide. This coating film serves to increase the oxygen producing over-potential of the positive electrode.

The nickel oxyhydroxide comprising a crystal having manganese dissolved therein and having a β type structure has a high equilibrium potential. As such, the open circuit voltage of the battery is maintained at a relatively high level and the self-discharge rate tends to be large. Thus, the addition of a small amount of rare earth metal oxide to the positive electrode material mixture leads to a great improvement of storage characteristics of the battery.

The amount of the rare earth metal oxide is preferably 0.1 to 2 wt%, more preferably 0.5 to 1.5 wt% relative to the total amount of the nickel oxyhydroxide, the electrolytic manganese dioxide, the graphite conductive material and the rare earth metal oxide.

The present invention will be specifically described below with reference to the accompanying drawings, but it should be understood that the present invention is not limited to the examples below.

### Example 1

### (Preparation of Nickel Hydroxide)

Constant amounts of an aqueous solution of nickel sulfate (II), an aqueous solution of manganese sulfate (II), an aqueous solution of sodium hydroxide and aqueous ammonia having certain concentrations were fed, by a pump, to a reaction vessel equipped with stirring blades having been filled with pure water and a small amount of hydrazine, while the reaction vessel was bubbled with nitrogen gas. During the feeding thereof, the reaction vessel was continuously stirred with the pH maintained at a constant level. Even after the feeding, the stirring was continued to allow the nuclei of the nickel hydroxide to be precipitated. Then, the nuclei were grown. The resulting particles were heated in another aqueous solution of sodium hydroxide to remove sulfate ions, which were then washed with water, followed by vacuum drying to give nickel hydroxide "a" having a composition of Ni_{0.95}Mn_{0.05}(OH)₂.

Subsequently, nickel hydroxide "b" having a composition of Ni_{0.95}Zn_{0.05}(OH)₂ was prepared in the same manner as above, except that an aqueous solution of zinc sulfate (II) was used in stead of an aqueous solution of manganese sulfate (II).

Nickel hydroxide "c" containing only nickel for a metal was further prepared in the same manner as above, except that an aqueous solution of manganese sulfate (II) and an aqueous solution of zinc sulfate (II) were not used.

Powdered X-ray diffraction confirmed that all the prepared nickel hydroxides "a" to "c" comprised crystals having a β type structure. The nickel hydroxides "a" to "c" also had the following physical properties:
a volume based average particle size of about 20 µm;
a tap density (after the tapping of 300 times) of about 2.2 g/cm³; and
a BET specific surface area of about 10 m²/g.

### (Preparation of Nickel Oxyhydroxide)

The nickel hydroxide "a" in an amount of 200 g was introduced into 1 L of an aqueous solution of sodium hydroxide with a concentration of 0.1 mol/L, after which a sufficient amount of an aqueous solution of sodium hypochlorite having an effective chlorine concentration of 10 wt% and serving as an oxidizing agent was added thereto, followed by stirring to convert the nickel hydroxide "a" into nickel oxyhydroxide. The obtained particles were thoroughly washed with water, which were then vacuum dried at 60°C for 24 hours to give nickel oxyhydroxide A.

The nickel hydroxides "b" and "c" were also put through the same procedure as above to produce nickel oxyhydroxides B and C.

Powdered X-ray diffraction confirmed that all the prepared nickel oxyhydroxides A to C comprised crystals having a β type structure. The nickel oxyhydroxides A to C also had the following physical properties:
a volume based average particle size of about 20 µm;
a tap density (after the tapping of 300 times) of about 2.3 g/cm³; and
a BET specific surface area of about 12 m²/g.

### (Production of Positive Electrode Material Mixture Pellet)

A positive electrode material mixture powder was prepared by mixing electrolytic manganese dioxide, the nickel oxyhydroxide A and graphite in a weight ratio of 50:45:5. To 100 parts by weight of the obtained positive electrode material mixture powder was added 1 part by weight of an alkaline electrolyte, which was then stirred and mixed by a mixer until uniform. The resultant was granulated to have a uniform particle size. The alkaline electrolyte used here was an aqueous solution of 40 wt% potassium hydroxide. The obtained particles were press-molded into a hollow cylinder to give a positive electrode material mixture pellet A.

The nickel oxyhydroxides B and C were also put through the same procedure as above to produce positive electrode material mixture pellets B and C.

### (Production of Nickel-Manganese Battery)

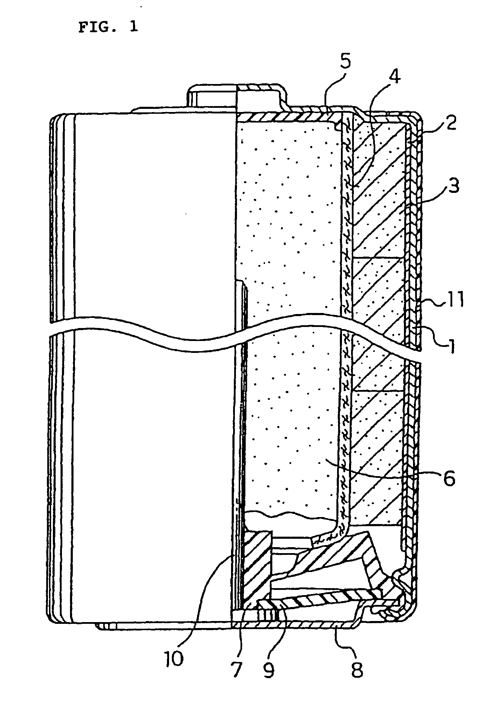

AA-sized nickel-manganese batteries A1, B1 and C1 were produced using the above obtained positive electrode material mixture pellets A, B and C, respectively. FIG. 1 is a front view, partially in cross section, of a nickel-manganese battery produced here.

A can case made of steel sheet and plated with nickel was used as a positive electrode case 1 serving also as a positive electrode terminal. Inside the positive electrode case 1 was formed a graphite coating film 2. A plurality of short cylindrical positive electrode material mixture pellets 3 were inserted into the positive electrode case 1. The positive electrode material mixture pellets 3 were pressed again in the positive electrode case 1 so that they were attached to the inner surface of the positive electrode case 1. Into the hollow of the positive electrode material mixture pellets 3 was inserted a separator 4 such that the separator 4 was in contact with the inner surface of the hollow. Inside the hollow, an insulating cap 5 was placed at the bottom of the can case.

Subsequently, an alkaline electrolyte was injected into the positive electrode case 1 to wet the positive electrode material mixture pellets 3 and the separator 4. After the injection of the electrolyte, a gel negative electrode 6 was filled inside the separator 4. The gel negative electrode 6 was made of sodium polyacrylate serving as a gelling agent, an alkaline electrolyte and a zinc powder serving as a negative electrode active material. The alkaline electrolyte was an aqueous solution of 40 wt% potassium hydroxide.

Meanwhile, a sealing member 7 made of resin was prepared. The sealing member 7 comprised a short cylindrical center part and a peripheral part, the peripheral part had a groove on the edge thereof. In the groove formed on the edge of the sealing member 7 was fitted the edge of a bottom plate 8 serving as a negative electrode terminal. Between the sealing member 7 and the bottom plate 8 was placed an insulated washer 9. In the hollow of the center part of the sealing member 7 was inserted a nail-shaped negative electrode current collector 10.

The negative electrode current collector 10 integrated with the sealing member 7, the bottom plate 8 and the insulated washer 9 as described above was inserted into the gel negative electrode 6. The edge of the opening of the positive electrode case 1 was crimped onto the periphery of the bottom plate 8 with the edge of the sealing member 7 therebetween. Thereby, the opening of the positive electrode case 1 was sealed. Finally, the outer surface of the positive electrode case 1 was covered with an outer label 11 to give a nickel-manganese battery.

### (Production of Model Cell)

In order to obtain the electrical characteristics of only nickel oxyhydroxide for comparison, model cells having the same structure as the above nickel-manganese batteries were produced.
The nickel oxyhydroxide A and graphite were mixed in a weight ratio of 92:8 to give a model material mixture powder. To 100 parts by weight of the obtained model material mixture powder was added 1 part by weight of an alkaline electrolyte, which was then stirred and mixed by a mixer until uniform. The resultant was granulated to have a uniform particle size. The alkaline electrolyte used here was an aqueous solution of 40 wt% potassium hydroxide. The obtained particles were press-molded into a hollow cylinder to give a model material mixture pellet A.

A model cell A2 having the same structure as the AA-sized alkaline battery shown in FIG. 1 was constructed in the same manner as previously described except that the model material mixture pellet A was used. The amount of nickel oxyhydroxide (NiOOH) contained in the model cell was 9.0 g. A sufficient amount of gel negative electrode was filled in the model cell.

The nickel oxyhydroxides B and C were put through the same procedure as above to produce model material mixture pellets B and C, and finally to produce model cells B2 and C2.

Nickel leads for collecting a current were welded to the positive and negative electrode terminals of each model cell. Each model cell having an aperture formed on the bottom of the positive electrode case thereof was immersed in a beaker filled with an aqueous solution of 40 wt% potassium hydroxide. In the beaker, an Hg/HgO electrode was also immersed as a reference electrode. Thereby, a preparation was made to measure the potentials of the positive and negative electrodes of the model cell relative to those of the Hg/HgO electrode. All the model cells were restricted by the positive electrode capacity. The measuring device containing the model cell as described above allows the observation of the discharge characteristics of the positive electrode comprising nickel oxyhydroxide alone (i.e. positive electrode not containing the electrolytic manganese dioxide).

### (Evaluation of Nickel-Manganese Battery)

### <Low Loaded Discharge Performance>

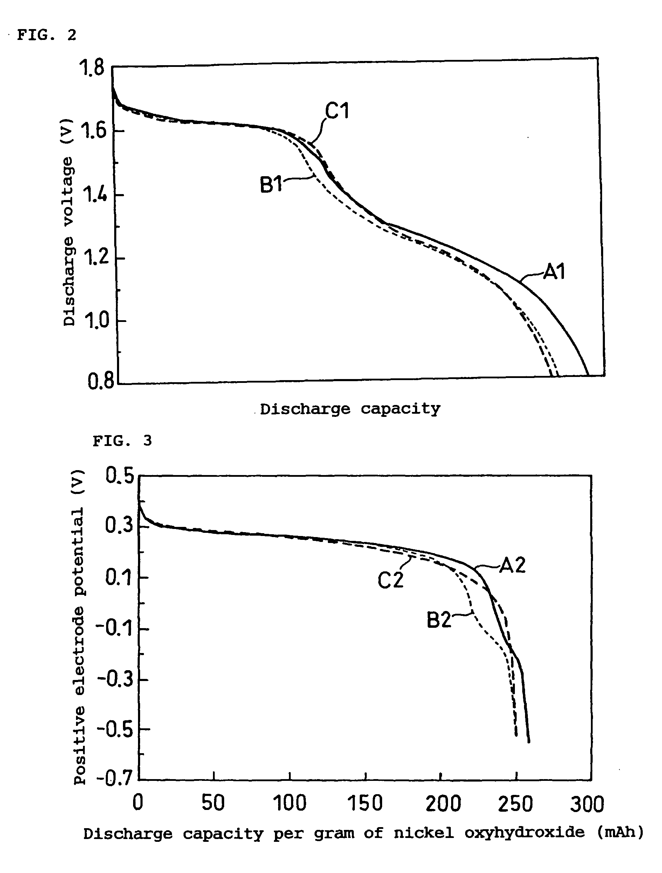

Each of the initial state nickel-manganese batteries A1 to C1 was continuously discharged at a constant current of 45 mA (low load) at 20°C, during which the discharge capacity was measured until the battery voltage reached 0.9 V. The discharge curves obtained from this are shown in FIG. 2.

### <High Loaded Discharge Performance>

Each of the initial state nickel-manganese batteries A1 to C1 was continuously discharged at a constant power of 1 W at 20°C, during which the discharge time was measured until the battery voltage reached an end-of-discharge voltage of 0.9 V.
Table 1 shows the discharge capacity at the low loaded discharge and the discharge time at the high loaded discharge for the initial state nickel-manganese batteries A1 to C1. They are given in relative terms with those of the nickel-manganese battery C1 being set at 100.

**Table 1**

| Battery | Nickel Oxyhydroxide (metal element: amount) | Discharge capacity at 45 mA <to 0.9 V> in relative terms | Discharge time at 1 W <to 0.9 V> in relative terms |
|---|---|---|---|
| A1 | Nickel Oxyhydroxide A (Mn: 5 mol%) | 108 | 110 |
| B1 | Nickel Oxyhydroxide B (Zn: 5 mol%) | 101 | 100 |
| C1 | Nickel Oxyhydroxide C (None) | 100 (Reference value) | 100 (Reference value) |

Table 1 demonstrates that the nickel-manganese battery Al using nickel oxyhydroxide that has a β type crystal structure and incorporates manganese therein (i.e. nickel oxyhydroxide A) has excellent characteristics in terms of both low loaded discharge and high loaded discharge.

In the discharge curves of FIG. 2, the voltage range around 1.6 V is a range where the discharge reaction of nickel oxyhydroxide mainly proceeds, and the voltage range around 1.2 V is a range where the discharge reaction of electrolytic manganese dioxide mainly proceeds.
As evident from FIG. 2, the capacity differences among the batteries A1 to C1 are more significant in the low voltage-side region where the discharge reaction of electrolytic manganese dioxide mainly proceeds than the region where the discharge reaction of nickel oxyhydroxide mainly proceeds.

### (Evaluation of Model Cell)

In order to further contemplate the evaluation results of the nickel-manganese batteries, each of the above-obtained model cells A2 to C2 was continuously discharged at a constant current of 45 mA (i.e. 5 mA per gram of the nickel oxyhydroxide) at 20°C. FIG. 3 shows the potential curves showing the correlation between the positive electrode potential relative to that of the Hg/HgO electrode and the discharge capacity per gram of the nickel oxyhydroxide.

It is observed, in FIG. 3, that the potential curve of the model cell A2 using the nickel oxyhydroxide A and that of the model cell B2 using the nickel oxyhydroxide B have two plateau regions. A first plateau region is observed in the region between +500 and +100 mV relative to the Hg/HgO electrode. A second plateau region is observed in the region between +100 and -400 mV relative to the same.

However, the discharge capacity in the first plateau region of the model cell B2 is much smaller than that of the model cell A2. In contrast, the discharge capacity in the second plateau region of the model cell B2 is larger than that of the model cell A2.

As for the potential curve of the model cell C2 using the nickel oxyhydroxide C, the discharge capacity in the first plateau region thereof is the largest among the three, but the potential curve of the model cell C2 does not have the second plateau region.

Taking the above evaluation results of the positive electrodes comprising only nickel oxyhydroxide into consideration, the behavior shown in FIG. 2 during the low loaded discharge for the nickel-manganese batteries A1 to C1 can be explained as follows.

As can be seen from FIG. 3, the nickel oxyhydroxide C is completely discharged to about bivalent in the first plateau region. As such, the electronic conductivity of the nickel oxyhydroxide C steeply decreases in the second region of between +100 and -400 mV relative to the Hg/HgO electrode. Likewise, in the nickel-manganese battery C1, the electronic conductivity of the whole positive electrode material mixture decreases in the second plateau region. As a result, a sufficient amount of the capacity is unlikely to be obtained from the electrolytic manganese dioxide that is discharged in the second plateau region.

The discharge capacity in the first plateau region of the nickel oxyhydroxide B is very small as can be seen from FIG. 3. As such, in the nickel-manganese battery B1, the discharge capacity in the first plateau region is insufficient. Therefore, a high capacity battery cannot be obtained.

The discharge capacity in the first plateau region of the nickel oxyhydroxide A, on the other hand, is relatively large. Also, the nickel oxyhydroxide A has an appropriate level of residual capacity in the second plateau region. As such, in the nickel-manganese battery A1, the discharge capacity in the first plateau region does not become insufficient. At the same time, the positive electrode material mixture can retain high electronic conductivity even in the second plateau region. Therefore, a sufficient amount of the capacity can be obtained from the electrolytic manganese dioxide in the second plateau region.

From the reasons stated above, it can be concluded that the nickel-manganese battery Al offered the highest discharge capacity. As described above, according to the present invention, it is possible to efficiently produce a higher capacity alkaline battery.

As stated previously, presumably, the discharge capacity due to normal nickel oxyhydroxide is obtained in the first plateau region whereas the discharge capacity due to the nickel oxide of high oxidation state locally formed by incorporation of a different element is obtained in the second region.

Particularly, the nickel oxyhydroxides incorporating manganese as a different element therein in an amount of 0.5 to 10 mol%, which is quite a broad range, have specificity. They offered preferable potential curves similar to that of the model cell A2.

Table 1 shows that the nickel-manganese battery A1 using the nickel oxyhydroxide A that incorporates manganese therein has extremely excellent high loaded discharge performance. Presumably, this is because when manganese is incorporated in the crystals of nickel oxyhydroxide, the nickel oxide of high oxidation state locally formed in the nickel oxyhydroxide has excellent proton diffusibility and excellent electronic conductivity as compared to the case where a different element such as zinc is incorporated. From this, it can be concluded that the nickel oxyhydroxide incorporating manganese therein is most excellent from the standpoint of the improvement of high loaded discharge performance.

### Example 2

### (Preparation of Nickel Hydroxide)

The following nickel hydroxides were prepared in the same manner as Example 1 except that the amount ratio between an aqueous solution of nickel sulfate (II) and an aqueous solution of manganese sulfate (II) were changed:
nickel hydroxide "d" having a composition of Ni_{0.97}Mn_{0.03}(OH)₂;
nickel hydroxide "e" having a composition of Ni_{0.94}Mn_{0.06}(OH)₂; and
nickel hydroxide "f" having a composition of Ni_{0.91}Mn_{0.09}(OH)₂.

Subsequently, the following nickel hydroxides were prepared in the same manner as above except that an aqueous solution of zinc sulfate (II) was used instead of an aqueous solution of manganese sulfate (II):
nickel hydroxide "g" having a composition of Ni_{0.97}Zn_{0.03} (OH)₂:
nickel hydroxide "h" having a composition of Ni_{0.94}Zn_{0.06}(OH)₂: and
nickel hydroxide "i" having a composition of Ni_{0.91}Zn_{0.09} (OH)₂.

Subsequently, the following nickel hydroxides were prepared in the same manner as above except that the combination of an aqueous solution of zinc sulfate (II) and an aqueous solution of cobalt sulfate was used instead of an aqueous solution of manganese sulfate (II):
nickel hydroxide "j" having a composition of Ni_{0.96}Zn_{0.03}Co_{0.01} (OH)₂;
nickel hydroxide "k" having a composition of Ni_{0.93}Zn_{0.06}CO_{0.01}(OH)₂; and
nickel hydroxide "1" having a composition of Ni_{0.90}Zn_{0.09}Co_{0.01} (OH)₂.

Powdered X-ray diffraction confirmed that all the prepared nickel hydroxides "d" to "1" comprised crystals having a β type structure. The nickel hydroxides "d" to "1" also had the following physical properties:
a volume based average particle size of about 20 µm;
a tap density (after the tapping of 300 times) of about 2.2 g/cm³; and
a BET specific surface area of about 10 m²/g.

### (Preparation of Nickel Oxyhydroxide)

The nickel hydroxides "d" to "l" were oxidized in the same manner as Example 1 to prepare nickel oxyhydroxides D to L.
Powdered X-ray diffraction confirmed that all the prepared nickel oxyhydroxides D to L comprised crystals having a β type structure. The nickel oxyhydroxides D to L also had the following physical properties:
a volume based average particle size of about 20 µm;
a tap density (after the tapping of 300 times) of about 2.3 g/cm³; and
a BET specific surface area of about 12 m²/g.

### (Production of Positive Electrode Material Mixture Pellet)

Positive electrode material mixture pellets D to L were produced in the same manner as Example 1 except that the nickel oxyhydroxides D to L were used.

### (Production of Nickel-Manganese Battery)

AA-sized nickel-manganese batteries D1 to L1 were produced in the same manner as Example 1 except that the produced positive electrode material mixture pellets D to L were used.

### (Production of Model Cell)

In order to obtain the electrical characteristics of only nickel oxyhydroxide for comparison, model cells having the same structure as the model cells of Example 1 were produced. Specifically, each of the nickel oxyhydroxides and graphite were mixed in a weight ratio of 92:8, which was then put through the same procedure as Example 1 to give model material mixture pellets D to L. Then, model cells D2 to L2 identical to those of Example 1 were assembled using the above-obtained model material mixture pellets D to L. Similar to Example 1, measuring devices were assembled using the obtained model cells to observe the discharge characteristics of the positive electrodes.

### (Evaluation of Model Cell)

Each of the model cells D2 to L2 were continuously discharged at a constant current of 45 mA (i.e. 5 mA per gram of the nickel oxyhydroxide) at 20°C, during which the discharge capacity in the first plateau region of between +500 and +100 mV relative to the Hg/HgO electrode and that in the second plateau region of between +100 and -400 mV relative to the same were measured. The results are shown in Table 2.

Two plateau regions were clearly observed in all the potential curves of the model cells D2 to L2. As the amount of the different metal contained in the nickel oxyhydroxide is increased, the discharge capacity in the first plateau region (i.e. high potential region) decreased and that in the second plateau region (i.e. low potential region) increased.

**Table 2**

| Battery | Nickel Oxyhydroxide (metal element: amount) | Discharge capacity in first plateau region (mAh/g) | Discharge capacity in second plateau region (mAh/g) |
|---|---|---|---|
| D2 | Nickel Oxyhydroxide D (Mn: 3 mol%) | 245 | 13 |
| E2 | Nickel Oxyhydroxide E (Mn: 6 mol%) | 236 | 17 |
| F2 | Nickel Oxyhydroxide F (Mn: 9 mol%) | 228 | 20 |
| G2 | Nickel Oxyhydroxide G (Zn: 3 mol%) | 227 | 22 |
| H2 | Nickel Oxyhydroxide H (Zn: 6 mol%) | 219 | 28 |
| I2 | Nickel Oxyhydroxide I (Zn: 9 mol%) | 212 | 32 |
| J2 | Nickel Oxyhydroxide J (Zn: 3 mol%, Co: 1 mol%) | 230 | 23 |
| K2 | Nickel Oxyhydroxide K (Zn: 6 mol%, Co: 1 mol%) | 219 | 27 |
| L2 | Nickel Oxyhydroxide L (Zn: 9 mol%, Co: 1 mol%) | 214 | 30 |

| | | | |
|---|---|---|---|
| First plateau region ranging from +500 to +100 mV | | | |
| Second plateau region ranging from +100 to -400 mV | | | |

### (Evaluation of Nickel-Manganese Battery)

### <Low Loaded Discharge Performance>

Each of the initial state nickel-manganese batteries D1 to L1 was continuously discharged at a constant current of 45 mA at 20°C, during which the discharge capacity was measured until the battery voltage reached 0.9 V.

### <High Loaded Discharge Performance>

Each of the initial state nickel-manganese batteries D1 to L1 was continuously discharged at a constant power of 1 W at 20°C, during which the discharge time was measured until the battery voltage reached an end-of-discharge voltage of 0.9 V.

Table 3 shows the discharge capacity at the low loaded discharge and the discharge time at the high loaded discharge for the initial state nickel-manganese batteries D1 to L1. They are given in relative terms with those of the nickel-manganese battery C1 of Example 1 being set at 100.

**Table 3**

| Battery | Nickel Oxyhydroxide (metal element: amount) | Discharge capacity at 45 mA <to 0.9 V> in relative terms | Discharge time at 1 W <to 0.9 V> in relative terms |
|---|---|---|---|
| D1 | Nickel Oxyhydroxide D (Mn: 3 mol%) | 108 | 109 |
| E1 | Nickel Oxyhydroxide E (Mn: 6 mol%) | 107 | 110 |
| F1 | Nickel Oxyhydroxide F (Mn: 9 mol%) | 106 | 109 |
| G1 | Nickel Oxyhydroxide G (Zn: 3 mol%) | 103 | 100 |
| H1 | Nickel Oxyhydroxide H (Zn: 6 mol%) | 99 | 98 |
| I1 | Nickel Oxyhydroxide I (Zn: 9 mol%) | 98 | 98 |
| J1 | Nickel Oxyhydroxide J (Zn: 3 molt, Co: 1 mol%) | 104 | 100 |
| K1 | Nickel Oxyhydroxide K (Zn: 6 mol%, Co: 1 mol%) | 99 | 99 |
| L1 | Nickel Oxyhydroxide L (Zn: 9 mol%, Co: 1 mol%) | 99 | 99 |

Table 2 illustrates that the positive electrodes of the model cells D2, E2, F2, G2 and J2 have a discharge capacity of not less than 220 mAh/g in the first plateau region and a discharge capacity of 10 to 25 mAh/g in the second plateau region. Table 3 demonstrates that the nickel-manganese batteries D1, E1, F1, G1 and J1 have an improved discharge capacity at the low loaded discharge 3 to 8% higher than that of the nickel-manganese battery C1.

The improvement of the low loaded discharge performance is due to the following facts: firstly, the nickel oxyhydroxides D, E, F, G and J offered an appropriate level of discharge capacity in the first plateau region. Secondly, because the nickel oxyhydroxides D, E, F, G and J had an appropriate level of residual capacity in the second plateau region, the electron conductivities of the positive electrode material mixtures were maintained even during the discharge of the electrolytic manganese dioxide, which improved the utilization of the electrolytic manganese dioxide.

All the positive electrodes of the model cells H2, I2, K2 and L2, on the other hand, offered an insufficient level of discharge capacity during the first plateau region. Because of this, the cells did not achieve higher capacity.

In terms of high loaded discharge performance, a remarkable improvement was observed in the nickel-manganese batteries D1, E1 and F1 using the nickel oxyhydroxides D, E and F incorporating manganese therein. Presumably, the reason why such difference was created is because the nickel oxides of high oxidation state produced by the incorporation of manganese into the crystals of the nickel oxyhydroxides have excellent proton diffusibility and excellent electronic conductivity, compared to the nickel oxides of high oxidation state produced by the different metals such as Zn and Co.

### Example 3

Positive electrode material mixture pellets M1 to M7 were produced in the same manner as Example 1 except the manganese amount relative to the total amount of the nickel and the manganese contained in the nickel oxyhydroxide was changed to those shown in Table 4.

### (Preparation of Nickel Hydroxide)

The following nickel hydroxides were prepared in the same manner as Example 1 except that the amount ratio between an aqueous solution of nickel sulfate (II) and an aqueous solution of manganese sulfate (II) were changed:

nickel hydroxide m1 having a composition of Ni_{0.999}Mn_{0.001} (OH) ₂;
nickel hydroxide m2 having a composition of Ni_{0.995}Mn_{0.005} (OH)₂;
nickel hydroxide m3 having a composition of Ni_{0.99}Mn_{0.01}(OH)₂:
nickel hydroxide m4 having a composition of Ni_{0.96}Mn_{0.04}(OH)₂;
nickel hydroxide m5 having a composition of Ni_{0.93}Mn_{0.07}(OH)₂;
nickel hydroxide m6 having a composition of Ni_{0.9}Mn_{0.1}(OH)₂; and
nickel hydroxide m7 having a composition of Ni_{0.88}Mn_{0.12}(OH)₂.

Powdered X-ray diffraction confirmed that all the prepared nickel hydroxides m1 to m7 comprised crystals having a β type structure. The nickel hydroxides m1 to m7 also had the following physical properties:
a volume based average particle size of 15 to 20 µm;
a tap density (after the tapping of 300 times) of 2.1 to 2.2 g/cm³; and
a BET specific surface area of 8 to 12 m²/g.

### (Preparation of Nickel Oxyhydroxide)

The nickel hydroxides m1 to m7 were oxidized in the same manner as Example 1 to prepare nickel oxyhydroxides M1 to M7.
Powdered X-ray diffraction confirmed that all the prepared nickel oxyhydroxides M1 to M7 comprised crystals having a β type structure. The nickel oxyhydroxides M1 to M7 also had the following physical properties:
a volume based average particle size of 15 to 20 µm;
a tap density (after the tapping of 300 times) of 2.2 to 2.3 g/cm³; and
a BET specific surface area of about 10 to 14 m²/g.

### (Production of Positive Electrode Material Mixture Pellet)

Positive electrode material mixture pellets M1 to M7 were produced in the same manner as Example 1 except that the nickel oxyhydroxides M1 to M7 were used. Subsequently, AA-sized nickel-manganese batteries M1 to M7 were produced in the same manner as Example 1 except that the produced positive electrode material mixture pellets M1 to M7 were used.

### (Evaluation of Nickel-Manganese Battery)

### <Low Loaded Discharge Performance>

Each of the initial state nickel-manganese batteries M1 to M7 was continuously discharged at a constant current of 45 mA at 20°C, during which the discharge capacity was measured until the battery voltage reached 0.9 V.

### <High Loaded Discharge Performance>

Each of the initial state nickel-manganese batteries M1 to M7 was continuously discharged at a constant power of 1 W at 20°C, during which the discharge time was measured until the battery voltage reached an end-of-discharge voltage of 0.9 V.

Table 4 shows the discharge capacity at the low loaded discharge and the discharge time at the high loaded discharge for the nickel-manganese batteries M1 to M7. They are given in relative terms with those of the nickel-manganese battery C1 of Example 1 being set at 100.

**Table 4**

| Battery | Nickel Oxyhydroxide (metal element: amount) | Discharge capacity at 45 mA <to 0.9 V> in relative terms | Discharge time at 1 W <to 0.9 V> in relative terms |
|---|---|---|---|
| M1 | Nickel Oxyhydroxide M1 (Mn: 0.1 mol%) | 101 | 100 |
| M2 | Nickel Oxyhydroxide M2 (Mn: 0.5 mol%) | 105 | 103 |
| M3 | Nickel Oxyhydroxide M3 (Mn: 1 mol%) | 106 | 106 |
| M4 | Nickel Oxyhydroxide M4 (Mn: 4 mol%) | 108 | 109 |
| M5 | Nickel Oxyhydroxide M5 (Mn: 7 mol%) | 107 | 107 |
| M6 | Nickel Oxyhydroxide M6 (Mn: 10 mol%) | 105 | 104 |
| M7 | Nickel Oxyhydroxide M7 (Mn: 12 mol%) | 100 | 98 |
| C1 | Nickel Oxyhydroxide C (None) | 100 (Reference value) | 100 (Reference value) |

Table 4 illustrates that the effect of higher capacity is obtained at both the low loaded discharge and the high loaded discharge when manganese is contained in an amount of 0.5 to 10 mol% in the nickel-manganese battery.

### Example 4

### (Production of Nickel-Manganese Battery)

Nickel-manganese batteries P to U identical to the nickel-manganese battery A1 of Example 1 were produced except that, in the production of the positive electrode material mixture pellets, the electrolytic manganese dioxide, the nickel oxyhydroxide A, graphite and an oxide additive were mixed in a weight ratio of 49:45:5:1 to produce positive electrode material mixture powders. The produced nickel-manganese batteries P, Q, R, S, T and U contained, as the oxide additive, yttrium oxide (Y₂O₃), erbium oxide (Er₂O₃), thulium oxide (Tm₂O₃), ytterbium oxide (Yb₂O₃), lutetium oxide (Lu₂O₃) and zinc oxide (ZnO), respectively. Meanwhile, a nickel-manganese battery V was produced in the same manner as above except that no oxide additive was added.

The obtained batteries P to V were put through an evaluation. Then, the effect produced by the addition of the oxides was examined.

### (Evaluation of Nickel-Manganese Battery)

### <Low Loaded Discharge Performance>

Each of the initial-state nickel-manganese batteries P to V was continuously discharged at a constant current of 45 mA at 20°C, during which the discharge capacity was measured until the battery voltage reached 0.9 V.

### <Storage characteristics>

The initial-state nickel-manganese batteries P to V were stored for 1 week at 60°C. Subsequently, each of them was continuously discharged at a constant current of 45 mA at 20°C, during which the discharge capacity was measured until the battery voltage reached an end-of-discharge voltage of 0.9 V.

Table 5 shows the initial discharge capacity at the low loaded discharge and the discharge capacity at the low loaded discharge after storage for the nickel-manganese batteries P to V. They are given in relative terms with the initial discharge capacity of the nickel-manganese battery V being set at 100.

**Table 5**

| Battery | Nickel Oxyhydroxide | Additive | Initial discharge capacity at 45 mA in relative terms | Discharge capacity at 45 mA after 1 week storage at 60°C in relative terms |
|---|---|---|---|---|
| P | Nickel Oxyhydroxide A | Y₂O₃ | 101 | 94 |
| Q | Nickel Oxyhydroxide A | Er₂O₃ | 101 | 95 |
| R | Nickel Oxyhydroxide A | Tm₂O₃ | 100 | 95 |
| S | Nickel Oxyhydroxide A | Yb₂O₃ | 101 | 95 |
| T | Nickel Oxyhydroxide A | Lu₂O₃ | 100 | 94 |
| U | Nickel Oxyhydroxide A | ZnO | 100 | 88 |
| V | Nickel Oxyhydroxide A | None | 100 | 87 |

It is evident from Table 5 that, even when the rare earth metal oxides such as yttrium oxide, erbium oxide, thulium oxide, ytterbium oxide, lutetium oxide and zinc oxide were contained in the positive electrode material mixtures, the initial discharge capacities were almost the same as that of the nickel-manganese battery V containing no additive.

In terms of the discharge capacity after storing for 1 week at 60°C, however, the batteries P to T using the rare earth metal oxides are absolutely excellent. It is considered that the rare earth metal oxide dissolves in a very small amount in the alkaline electrolyte to form a hydroxide, and the hydroxide deposits on the surface of the nickel oxyhydroxide particles to form a coating film. As a result, the oxygen producing over-potential of the positive electrode is increased, and the self-discharge reaction is minimized.

The nickel oxyhydroxide comprising crystals having a β type structure and incorporating manganese therein has a high equilibrium potential. As such, the open circuit voltage of the battery is maintained at a relatively high level and the self-discharge rate tends to be large. Accordingly, the addition of the rare earth metal oxide to the positive electrode material mixture is effective particularly when it is necessary to improve the storage characteristics of the battery using a nickel oxyhydroxide comprising crystals having a β type structure and incorporating manganese therein.

### Example 5

### (Production of Nickel-Manganese Battery)

Batteries W1 to W8 identical to the nickel-manganese battery A1 of Example 1 were produced except that, in the production of the positive electrode material mixture pellets, the weight ratios between the nickel oxyhydroxide A and electrolytic manganese dioxide shown in Table 6 were used, and 5 parts by weight of a graphite conductive material was mixed with 95 parts by weight of the total of nickel oxyhydroxide A and the electrolytic manganese dioxide to give positive electrode material mixture powders.

### (Evaluation of Nickel-Manganese Battery)

### <Low Loaded Discharge Performance>

Each of the initial state nickel-manganese batteries W1 to W8 was continuously discharged at a constant current of 45 mA at 20°C, during which the discharge capacity was measured until the battery voltage reached 0.9 V.

### <High Loaded Discharge Performance>

Each of the initial state nickel-manganese batteries W1 to W8 was continuously discharged at a constant power of 1 W at 20°C, during which the discharge time was measured until the battery voltage reached an end-of-discharge voltage of 0.9 V.

Table 6 shows the discharge capacity at the low loaded discharge and the discharge time at the high loaded discharge for the nickel-manganese batteries W1 to W8. They are given in relative terms with those of the nickel-manganese battery C1 of Example 1 being set at 100.

**Table 6**

| Battery | Weight ratio between nickel oxyhydroxide and electrolytic manganese (weight ratio) | Discharge capacity at 45 mA <to 0.9 V> in relative terms | Discharge time at 1 W <to 0.9 V> in relative terms |
|---|---|---|---|
| W1 | Nickel Oxyhydroxide A : Electrolytic Manganese = 5:95 | 113 | 96 |
| W2 | Nickel Oxyhydroxide A : Electrolytic Manganese = 10:90 | 112 | 101 |
| W3 | Nickel Oxyhydroxide A : Electrolytic Manganese = 20:80 | 111 | 105 |
| W4 | Nickel Oxyhydroxide A : Electrolytic Manganese = 40:60 | 109 | 110 |
| W5 | Nickel Oxyhydroxide A : Electrolytic Manganese =60:40 | 106 | 112 |
| W6 | Nickel Oxyhydroxide A : Electrolytic Manganese = 80:20 | 103 | 113 |
| W7 | Nickel Oxyhydroxide A : Electrolytic Manganese = 90:10 | 99 | 113 |
| W8 | Nickel Oxyhydroxide A : Electrolytic Manganese = 95:5 | 95 | 112 |
| C1 | Nickel Oxyhydroxide C : Electrolytic Manganese = 45:50 | 100 (Reference value) | 100 (Reference value) |

As can be seen from Table 6, taking the balance of the battery characteristics into consideration, preferred amount of the nickel oxyhydroxide is 10 to 80 wt% relative to the total amount of the nickel oxyhydroxide and the electrolytic manganese dioxide, and preferred amount of the electrolytic manganese dioxide is 20 to 90 wt% relative to the same.

### Example 6

### (Production of Nickel-Manganese Battery)

Batteries X1 to X4 identical to the nickel-manganese battery A1 of Example 1 were produced except that, in the production of the positive electrode material mixture pellets, the weight ratio between the nickel oxyhydroxide A and the electrolytic manganese dioxide was changed to 50:50, and the amount of the graphite conductive material relative to the total amount of the nickel oxyhydroxide A, the electrolytic manganese dioxide and the graphite conductive material was changed to those shown in Table 7 to produce the positive electrode material mixture powders. The produced batteries X1 to X4 were put through an evaluation.

### (Evaluation of Nickel-Manganese Battery)

### <Low Loaded Discharge Performance>

Each of the initial state nickel-manganese batteries X1 to X4 was continuously discharged at a constant current of 45 mA at 20°C, during which the discharge capacity was measured until the battery voltage reached 0.9 V.

### <High Loaded Discharge Performance>

Each of the initial state nickel-manganese batteries X1 to X4 was continuously discharged at a constant power of 1 W at 20°C, during which the discharge time was measured until the battery voltage reached an end-of-discharge voltage of 0.9 V.

Table 7 shows the discharge capacity at the low loaded discharge and the discharge time at the high loaded discharge for the nickel-manganese batteries X1 to X4. They are given in relative terms with those of the nickel-manganese battery C1 of Example 1 being set at 100.

**Table 7**

| Battery | Amount of graphite conductive material relative to the total amount of nickel oxyhydroxide, electrolytic manganese dioxide and graphite (wt%) | Discharge capacity at 45 mA <to 0.9 V> in relative terms | Discharge time at 1W <to 0.9 V> in relative terms |
|---|---|---|---|
| X1 | 3 | 103 | 103 |
| X2 | 5 | 108 | 109 |
| X3 | 8 | 107 | 110 |
| X4 | 10 | 104 | 108 |
| Cl | 5 | 100 (Reference value) | 100 (Reference value) |

As can be seen from Table 7, taking the balance of the battery characteristics into consideration, preferred amount of the graphite conductive material is 3 to 10 wt% relative to the total amount of the nickel oxyhydroxide, the electrolytic manganese dioxide and the graphite conductive material.

### Example 7

### (Production of Nickel-Manganese Battery)

Batteries Y1 to Y5 identical to the nickel-manganese battery Al of Example 1 were produced except that, in the production of the positive electrode material mixture pellets, the electrolytic manganese dioxide, the nickel oxyhydroxide A and the graphite conductive material were mixed in a weight ratio of 49:45:5, to which Y₂O₃ was further added in an amount shown in Table 8, the amount being expressed in wt% relative to the total amount of the nickel oxyhydroxide A, the electrolytic manganese dioxide, the graphite conductive material and Y₂O₃ to produce positive electrode material mixture powders. The obtained batteries Y1 to Y5 were put through an evaluation.

### (Evaluation of Nickel-Manganese Battery)

### <Low Loaded Discharge Performance>

Each of the initial state nickel-manganese batteries Y1 to Y5 was continuously discharged at a constant current of 45 mA at 20°C, during which the discharge capacity was measured until the battery voltage reached 0.9 V.

### <Storage characteristics>

The nickel-manganese batteries Y1 to Y5 were stored for 1 week at 60°C. Subsequently, each of them was continuously discharged at a constant current of 45 mA at 20°C, during which the discharge capacity was measured until the battery voltage reached an end-of-discharge voltage of 0.9 V.

Table 8 shows the discharge capacity at the low loaded discharge for the nickel-manganese batteries Y1 to Y5. They are given in relative terms with that of the initial state nickel-manganese battery V of Example 4 being set at 100.

**Table 8**

| Battery | Amount of Y₂O₃ relative to the total amount of nickel oxyhydroxide, electrolytic manganese dioxide, graphite and Y₂O₃ (Wt%) | Discharge capacity at 45 mA <to 0.9 V> in relative terms | Discharge capacity at storage at 60°C in relative terms in relative terms |
|---|---|---|---|
| Y1 | 0.1 | 100 | 92 |
| Y2 | 0.5 | 100 | 93 |
| Y3 | 1.0 | 101 | 94 |
| Y4 | 1.5 | 101 | 94 |
| Y5 | 2.0 | 100 | 94 |
| V | 0 | 100 (Reference value) | 87 |

Table 8 illustrates that, even when Y₂O₃ is contained in an amount of 0.1 to 2 wt% relative to the whole positive electrode material mixture, the storage characteristics almost the same as those of the nickel-manganese battery P of Example 4 were obtained. It is assumed that similar result can be obtained with the use of other rare earth metal oxides. Although the details are not given here, that has actually been confirmed.

In the Examples described above, the nickel oxyhydroxides had a volume based average particle size of 15 to 20 µm, a tap density (after the tapping of 300 times) of 2.2 to 2.3 g/cm³ and a BET specific surface area of about 10 to 14 m²/g. However, it should be understood that the present invention does not require nickel oxyhydroxide powders having the physical properties just stated above. Nickel oxyhydroxides having the physical properties different from those mentioned above can be used in the present invention.

Moreover, although Examples given above produced alkaline batteries having a so-called inside-out structure, the present invention is applicable to batteries with different structures such as button type batteries and prismatic batteries.

### Industrial Applicability

As described above, according to the present invention, it is possible to effectively produce a higher capacity alkaline battery. At the same time, the improvement of high loaded discharge performance can be expected. Accordingly, the industrial importance thereof is enormous. The present invention can be applied to primary alkaline batteries, and it is particularly effective in nickel-manganese batteries.

## Claims

1. An alkaline battery comprising a positive electrode, a negative electrode and an alkaline electrolyte,
said positive electrode comprising a positive electrode material mixture containing nickel oxyhydroxide, electrolytic manganese dioxide and a graphite conductive material,
wherein said nickel oxyhydroxide comprises a crystal having a β type structure, said crystal having manganese dissolved therein, and
the amount of said manganese contained in said nickel oxyhydroxide is 0.5 to 10 mol% relative to the total amount of nickel and said manganese contained in said nickel oxyhydroxide.

2. An alkaline battery comprising a positive electrode, a negative electrode and an alkaline electrolyte,
said positive electrode comprising a positive electrode material mixture containing nickel oxyhydroxide, electrolytic manganese dioxide and a graphite conductive material,
wherein, when a molded article comprising a mixture of said nickel oxyhydroxide and said graphite conductive material is immersed in an aqueous solution containing 40 wt% KOH and a constant current per gram of said nickel oxyhydroxide of 5 mA is applied to said molded article, the potential of said molded article has a first plateau region ranging from +500 to +100 mV relative to an Hg/HgO electrode and a second plateau region ranging from +100 to -400 mV relative to said Hg/HgO electrode,
the discharge capacity per gram of said nickel oxyhydroxide in said first plateau region is 220 to 250 mAh, and
the discharge capacity per gram of said nickel oxyhydroxide in said second plateau region is 10 to 25 mAh.

3. The alkaline battery in accordance with claim 1,
wherein the amount of said nickel oxyhydroxide is 10 to 80 wt% relative to the total amount of said nickel oxyhydroxide and said electrolytic manganese dioxide contained in said positive electrode material mixture, and the amount of said electrolytic manganese dioxide is 20 to 90 wt% relative to said total amount.

4. The alkaline battery in accordance with claim 2,
wherein the amount of said nickel oxyhydroxide is 10 to 80 wt% relative to the total amount of said nickel oxyhydroxide and said electrolytic manganese dioxide contained in said positive electrode material mixture, and the amount of said electrolytic manganese dioxide is 20 to 90 wt% relative to said total amount.

5. The alkaline battery in accordance with claim 1,
wherein the amount of said graphite conductive material is 3 to 10 wt% relative to the total amount of said nickel oxyhydroxide, said electrolytic manganese dioxide and said graphite conductive material contained in said positive electrode material mixture.

6. The alkaline battery in accordance with claim 2,
wherein the amount of said graphite conductive material is 3 to 10 wt% relative to the total amount of said nickel oxyhydroxide, said electrolytic manganese dioxide and said graphite conductive material contained in said positive electrode material mixture.

7. The alkaline battery in accordance with claim 1,
wherein said positive electrode material mixture further contains at least one rare earth metal oxide selected from the group consisting of Y₂O₃, Er₂O₃, Tm₂O₃, Yb₂O₃ and Lu₂O₃, and the amount of said rare earth metal oxide is 0.1 to 2 wt% relative to the total amount of said nickel oxyhydroxide, said electrolytic manganese dioxide, said graphite conductive material and said rare earth metal oxide.

8. The alkaline battery in accordance with claim 2,
wherein said positive electrode material mixture further contains at least one rare earth metal oxide selected from the group consisting of Y₂O₃, Er₂O₃, Tm₂O₃, Yb₂O₃ and Lu₂O₃, the amount of said rare earth metal oxide is 0.1 to 2 wt% relative to the total amount of said nickel oxyhydroxide, said electrolytic manganese dioxide, said graphite conductive material and said rare earth metal oxide.

## Amended claims

### Amended claims under Art. 19.1 PCT

**1.** An alkaline battery comprising a positive electrode, a negative electrode and an alkaline electrolyte,
said positive electrode comprising a positive electrode material mixture containing nickel oxyhydroxide, electrolytic manganese dioxide and a graphite conductive material,
wherein said nickel oxyhydroxide comprises a crystal having a β type structure, said crystal having manganese dissolved therein, and
the amount of said manganese contained in said nickel oxyhydroxide is 0.5 to 10 molt relative to the total amount of nickel and said manganese contained in said nickel oxyhydroxide.

**2.** (Amended) An alkaline battery comprising a positive electrode, a negative electrode and an alkaline electrolyte,
said positive electrode comprising a positive electrode material mixture containing nickel oxyhydroxide, electrolytic manganese dioxide and a graphite conductive material,
said nickel oxyhydroxide comprising a crystal having manganese dissolved therein and having a β type structure,
wherein, when a molded article comprising a mixture of said nickel oxyhydroxide and said graphite conductive material is immersed in an aqueous solution containing 40 wt% KOH and a constant current per gram of said nickel oxyhydroxide of 5 mA is applied to said molded article, the potential of said molded article has a first plateau region ranging from +500 to +100 mV relative to an Hg/HgO electrode and a second plateau region ranging from +100 to -400 mV relative to said Hg/HgO electrode,
the discharge capacity per gram of said nickel oxyhydroxide in said first plateau region is 220 to 250 mAh, and
the discharge capacity per gram of said nickel oxyhydroxide in said second plateau region is 10 to 25 mAh.

**3.** The alkaline battery in accordance with claim 1,
wherein the amount of said nickel oxyhydroxide is 10 to 80 wt% relative to the total amount of said nickel oxyhydroxide and said electrolytic manganese dioxide contained in said positive electrode material mixture, and the amount of said electrolytic manganese dioxide is 20 to 90 wt% relative to said total amount.

**4.** The alkaline battery in accordance with claim 2,
wherein the amount of said nickel oxyhydroxide is 10 to 80 wt% relative to the total amount of said nickel oxyhydroxide and said electrolytic manganese dioxide contained in said positive electrode material mixture, and the amount of said electrolytic manganese dioxide is 20 to 90 wt% relative to said total amount.

**5.** The alkaline battery in accordance with claim 1,
wherein the amount of said graphite conductive material is 3 to 10 wt% relative to the total amount of said nickel oxyhydroxide, said electrolytic manganese dioxide and said graphite conductive material contained in said positive electrode material mixture.

**6.** The alkaline battery in accordance with claim 2,
wherein the amount of said graphite conductive material is 3 to 10 wt% relative to the total amount of said nickel oxyhydroxide, said electrolytic manganese dioxide and said graphite conductive material contained in said positive electrode material mixture.

**7.** The alkaline battery in accordance with claim 1,
wherein said positive electrode material mixture further contains at least one rare earth metal oxide selected from the group consisting of Y₂O₃, Er₂O₃, Tm₂O₃, Yb₂O₃ and Lu₂O₃, and the amount of said rare earth metal oxide is 0.1 to 2 wt% relative to the total amount of said nickel oxyhydroxide, said electrolytic manganese dioxide, said graphite conductive material and said rare earth metal oxide.

**8.** The alkaline battery in accordance with claim 2,
wherein said positive electrode material mixture further contains at least one rare earth metal oxide selected from the group consisting of Y₂O₃, Er₂O₃, Tm₂O₃, Yb₂O₃ and Lu₂O₃, the amount of said rare earth metal oxide is 0.1 to 2 wt% relative to the total amount of said nickel oxyhydroxide, said electrolytic manganese dioxide, said graphite conductive material and said rare earth metal oxide.
